# FASCICULE DE BREVET EUROPEEN

(11) **EP 0 705 729 B1**
(45) Date de publication et mention de la délivrance du brevet: **12.01.2000**
(21) Numéro de dépôt: 95402200.0
(22) Date de dépôt: 02.10.1995
(51) Int. Cl.: B60Q 1/068, B60Q 1/076

(54) **Dispositif de réglage d'orientation pour projecteur de véhicule automobile**
Steuerungseinrichtung der Neigung eines Kraftfahrzeugscheinwerfer
Device for controlling the orientation of a motorvehicle headlamp

(30) Priorité: 03.10.1994 FR 9411782
(43) Date de publication de la demande: 10.04.1996
(73) Titulaire: VALEO VISION, 93000 Bobigny (FR)
(72) Inventeur: Vraux, Didier, 93130 Noisy le Sec (FR); Bigot, Bernard, 91750 Champcueil (FR)
(74) Mandataire: Le Forestier, Eric

(56) Documents cités:
- FR-A- 2 624 453
- US-A- 4 333 131

## Description

La présente invention concerne de manière générale le réglage de l'orientation des faisceaux lumineux émis par des projecteurs, notamment dans des véhicules automobiles.

Elle concerne plus particulièrement un dispositif de réglage de l'orientation selon deux directions perpendiculaires d'un faisceau lumineux émis par un projecteur muni d'au moins un réflecteur comprenant trois appuis essentiellement ponctuels contre une structure fixe, les trois appuis étant disposés aux trois sommets d'un triangle rectangle, l'un desdits appuis étant fixe et les deux autres appuis délimitant un côté du triangle adjacent à l'angle droit, étant réglables, ledit dispositif de réglage comprenant deux éléments d'entraînement comportant chacun une extrémité définissant un appui réglable, montée sur le réflecteur, un premier élément d'entraînement coopérant par vissage à son extrémité opposée avec la structure fixe.

On connaît déjà du document FR - A - 2 624 453, un dispositif de réglage du type précité, dans lequel les deux éléments d'entraînement sont constitués par des vis de réglage, une première vis de réglage étant vissée à son extrémité opposée dans un structure fixe et traversant un organe auxiliaire. Cette première vis de réglage est actionnée par l'intermédiaire d'une molette située derrière l'organe auxiliaire.

L'autre vis de réglage traverse la structure fixe et coopére par vissage avec l'organe auxiliaire, elle est actionnée à l'aide d'une autre molette située derrière l'élément auxiliaire.

Pour le réglage de l'inclinaison du projecteur dans un plan horizontal, un opérateur intervient sur le premier élément d'entraînement en vissant celui-ci à travers la structure fixe et pour le réglage de l'inclinaison du projecteur dans un plan vertical, on agit alors sur le second organe d'entraînement qui est vissé à l'intérieur de l'organe auxiliaire.

Selon ce document, les éléments d'entraînement ne sont pas entraînés en rotation simultanément. Ils sont indépendants l'un de l'autre. Un tel dispositif ne permet pas un réglage précis de l'orientation du réflecteur et de ce fait du faisceau lumineux émis.

On connaît en outre du document FR-2 636 578, appartenant à la Demanderesse, un dispositif de réglage qui comprend un organe d'entraînement apte à déplacer au moins l'un des deux appuis réglables, et des moyens pour relier sélectivement l'organe d'entraînement au premier appui réglable horizontalement aligné avec l'appui fixe ou immobiliser celui-ci, tandis que l'organe d'entraînement est relié en permanence au second appui réglable, afin de déterminer les deux modes de réglage.

Ces moyens de sélection comprennent deux bras qui sont disposés en croix et qui sont articulés dans une région centrale sur un pivot commun libre de coulisser horizontalement. En outre, un desdits bras est articulé d'une part à son extrémité inférieure autour d'un pivot fixe qui est situé dans une première glissière horizontale, en arrière du second appui réglable et d'autre part à son extrémité supérieure autour d'un pivot apte à coulisser dans une deuxième glissière horizontale. L'autre bras est monté pivotant d'une part à son extrémité inférieure sur un pivot apte à coulisser dans la première glissière horizontale, assujetti à l'organe d'entraînement et solidaire du second appui réglable, et d'autre part à son extrémité supérieure sur un pivot coulissant dans la seconde glissière horizontale, en arrière du premier appui réglable. Les deux bras comportent à leurs deux extrémités des glissières longitudinales dans lesquelles les pivots peuvent coulisser pour prendre des orientations variables. De plus, lesdits moyens de sélection comprennent un système à fourches pour sélectivement immobiliser dans sa glissière l'un ou l'autre des pivots supérieurs desdits bras.

Ce dispositif de réglage est un système complexe qui présente un encombrement important à l'arrière du réflecteur, ce qui pose des problèmes pour sa mise en place dans un boîtier de projecteur où l'espace d'aménagement est réduit.

En outre, un tel dispositif nécessite des aménagements spéciaux du boîtier notamment pour réaliser les glissières. Un tel boîtier est difficile à mouler, ce qui ajoute un surcoût de fabrication.

Afin de résoudre les inconvénients précités, la présente invention propose un dispositif de réglage simple, pratique et économique, présentant un encombrement minimum.

Plus particulièrement, selon l'invention le dispositif de réglage comprend deux organes rotatifs de transmission situés respectivement au niveau des deux appuis réglables, et aptes à être entraînés simultanément en rotation respectivement autour de deux axes X, Y perpendiculaires au plan du triangle, par un premier organe d'entraînement, lesdits organes rotatifs de transmission étant fixes en translation axiale et montés sur les deux éléments d'entraînement solidaires en rotation desdits organes rotatifs de transmission tout en étant libres en translation axiale, et le deuxième élément d'entraînement coopérant par vissage avec une structure mobile en translation et bloquée en rotation, de sorte que le mouvement simultané de rotation des organes rotatifs de transmission entraîne un déplacement simultané en translation des deux appuis réglables suivant lesdits axes X, Y, pour effectuer l'orientation du faisceau lumineux suivant une des deux directions, et il comprend un deuxième organe d'entraînement qui entraîne en translation axiale la tige filetée, de façon à translater axialement l'élément d'entraînement associé et seulement un appui réglable correspondant pour effectuer l'orientation du faisceau lumineux selon la deuxième direction perpendiculaire.

Selon un mode de réalisation du dispositif de réglage selon l'invention, les deux appuis réglables délimitent le côté vertical du triangle de sorte que le mouvement de translation simultané des deux appuis réglables selon les axes X, Y réalise l'orientation en azimut du faisceau lumineux et le mouvement de translation individuel selon l'axe Y du deuxième appui réglable réalise l'orientation en site du faisceau lumineux.

Selon une variante de réalisation du dispositif de réglage selon l'invention, les deux appuis réglables délimitent le côté horizontal du triangle rectangle de sorte que le mouvement de translation simultané des deux appuis réglables suivant les axes X, Y réalise l'orientation en site du faisceau lumineux et le mouvement individuel de translation suivant l'axe Y du deuxième appui réglable réalise l'orientation en azimut du faisceau lumineux.

La description qui va suivre en regard des dessins annexés, donnés à titre d'exemples, non limitatifs, fera bien comprendre en quoi consiste l'invention et comment elle peut être réalisée.

La figure 1 est une vue en perspective schématique d'un réflecteur de projecteur de véhicule automobile, équipé d'un dispositif de réglage d'orientation conforme à l'invention.

La figure 2 est une vue partielle de côté, en coupe verticale, d'un projecteur muni du dispositif de réglage selon l'invention.

La figure 3 est une vue partielle, en coupe selon le plan A-A du projecteur de la figure 2.

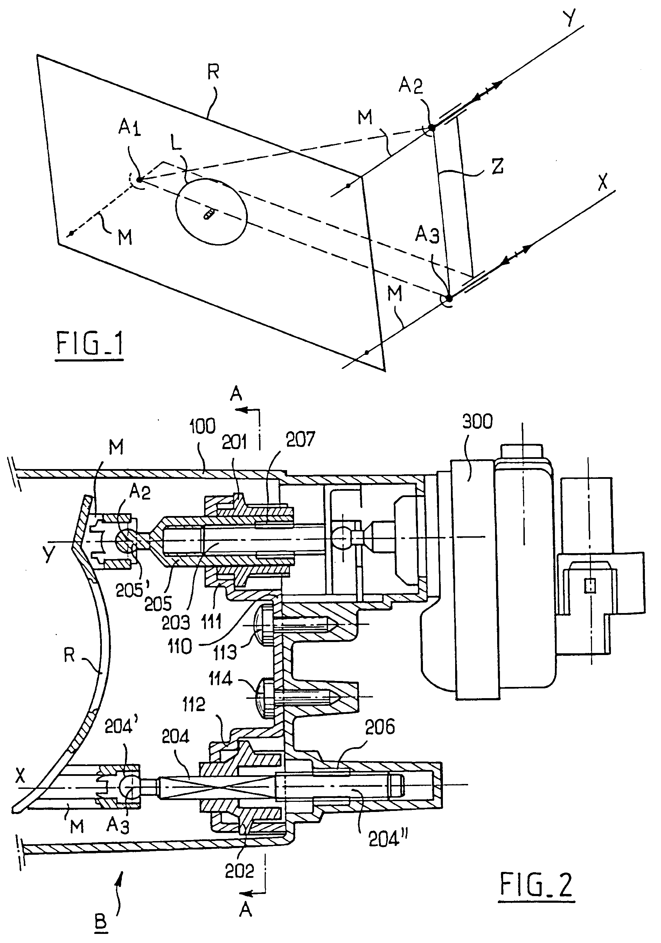

En référence aux figures 1 et 2, un réflecteur R représenté de façon schématique, muni d'une lampe L d'un projecteur d'un véhicule automobile s'appuie sur la paroi arrière 100 d'un boîtier B dudit projecteur par l'intermédiaire de trois montants M sur trois appuis essentiellement ponctuels A₁, A₂, A₃. Ces trois appuis A₁, A₂, A₃ définissent ensemble un triangle rectangle, l'appui A₁ étant fixe et les deux appuis A₂, A₃ étant réglables.

Comme on peut le voir sur la figure 1, l'appui A₁ est situé à l'extrémité du côté horizontal du triangle rectangle à l'opposé de l'angle droit et les deux appuis A₂, A₃ sont alignés suivant le côté vertical Z du triangle, le point A₂ étant situé à l'extrémité supérieure et le point A₃ à l'extrémité inférieure dudit côté vertical Z. Les appuis ponctuels A₂, A₃ sont déplaçables au moyen d'un dispositif de réglage, qui sera décrit ultérieurement, selon des axes X, Y perpendiculaires au plan du triangle pour modifier l'orientation verticale et horizontale du réflecteur et réaliser l'orientation en site et en azimut du faisceau lumineux émis par le projecteur.

Plus particulièrement, selon le mode de réalisation représenté sur les figures 1, 2 et 3, les appuis A₂, A₃ sont déplaçables simultanément suivant lesdits axes Y et X de façon à faire varier l'orientation horizontale du réflecteur et effectuer le réglage en azimut du faisceau, et l'appui A₂ est déplaçable individuellement suivant l'axe Y de façon à modifier l'orientation verticale du réflecteur pour réaliser l'orientation en site du faisceau lumineux.

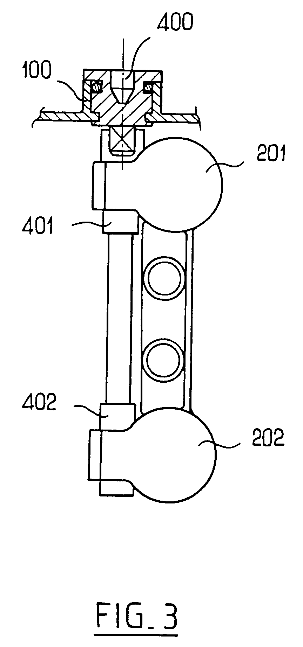

Le dispositif de réglage, plus particulièrement représenté sur les figures 2 et 3, comprend à l'intérieur du boîtier B, au niveau des appuis ponctuels réglables A₂, A₃, deux pignons 201, 202 montés à rotation respectivement autour des deux axes Y, X, dans deux cages 111, 112 définies dans un support 110 fixé par deux vis 113, 114 sur la paroi arrière 100 du boîtier B . Une vis sans fin 400 montée à rotation dans des paliers 401, 402 prévus à l'intérieur du boîtier B, dans un plan vertical décalé par rapport au plan contenant les axes de rotation X, Y des deux pignons 202, 201, est apte à entraîner simultanément les deux pignons en rotation autour de leurs axes X, Y.

Comme on peut le voir sur la figure 3, la tête de la vis sans fin 400 est montée dans un logement prévu dans la paroi arrière 100 du boîtier B et est accessible de l'extérieur.

Les deux pignons 201, 202 sont fixes en translation axiale.

Le pignon 202 est monté à rotation autour de l'axe X sur un premier élément d'entraînement 204 qui s'étend le long dudit axe X. Ce premier élément d'entraînement 204, ici une tige à section carrée, appelée carré d'entraînement, est solidaire en rotation du pignon 202 tout en étant libre en translation axiale. Le carré d'entraînement 204 comporte à une extrémité une tête sphérique 204' montée par cloquage dans un aménagement d'un montant M du réflecteur R, définissant ainsi l'appui ponctuel A₃ dudit réflecteur R. En outre, le carré d'entraînement 204 coopére par vissage à son extrémité opposée 204" avec le boîtier B. Selon le mode de réalisation représenté sur la figure 2, l'extrémité opposée 204" dudit carré d'entraînement 204 est munie d'un filetage monté dans un insert taraudé 206 solidaire de la paroi arrière 100 du boîtier B. Ainsi, la rotation du pignon 202 entraîne la rotation du carré d'entraînement 204, de sorte que son extrémité correspondante 204" se visse et se dévisse dans l'insert taraudé 206, ce qui entraîne un déplacement en translation dudit carré d'entraînement selon l'axe X, et donc la translation de l'appui A₂ selon ledit axe X.

Le pignon 201 est monté à rotation autour de l'axe Y, sur un deuxième élément d'entraînement 205 qui se présente sous la forme d'une tige creuse qui s'étend le long de l'axe Y. Cet élément d'entraînement 205 est monté dans une cannelure (ici non représentée) prévue dans la paroi interne du pignon 201 de telle sorte que l'élément d'entraînement 205 est lié en rotation au pignon 201 tout en étant libre en translation selon l'axe Y. En outre, le deuxième élément d'entraînement 205 comporte à une extrémité une tête sphérique 205' cloquée dans un aménagement d'un montant M du réflecteur R et définissant ainsi l'appui ponctuel A₂ dudit réflecteur. L'élément d'entraînement 205 coopére par vissage avec une structure mobile en translation et bloquée en rotation. Dans ce cas typique, le deuxième élément d'entraînement 205 est vissé par l'intermédiaire d'un insert taraudé 207 sur une tige filetée 203 bloquée en rotation à l'arrière du boîtier B, à l'aide d'un correcteur électrique 300. La rotation du pignon 201 entraîne la translation selon l'axe Y de l'élément d'entraînement 205 par vissage ou dévissage sur la tige filetée 203, et donc la translation axiale de l'appui A₂.

Ainsi, par l'intermédiaire de la vis sans fin 400, on entraîne simultanément en rotation les deux pignons 201, 202, ce qui provoque un mouvement simultané en translation selon les axes Y, X dans le même sens des appuis ponctuels A₂, A_{3,} pour orienter en azimut le faisceau lumineux émis par le réflecteur R.

Par ailleurs, le correcteur électrique 300 monté dans la paroi arrière 100 du boîtier B et relié à l'extrémité de la tige filetée 203, située du côté de la paroi arrière 100 du boîtier B, est apte à translater de façon indépendante à la rotation des deux pignons, ladite tige 203 selon l'axe Y de rotation du pignon 201. La translation individuelle de la tige 203 entraîne la translation de l'élément d'entraînement 205 dans la cannelure prévue dans la paroi interne du pignon 201 de façon à déplacer selon l'axe Y l'appui A₂ défini à l'extrémité 205' de l'élément d'entraînement 205. Les deux pignons 201, 202 étant fixes au repos, le mouvement de translation individuel de l'appui A₂ s'effectue alors que l'appui A₃ reste fixe et permet de réaliser l'orientation en site du faisceau lumineux émis par le réflecteur.

En particulier, on peut envisager que les deux appuis réglables se situent sur le côté horizontal du triangle rectangle de telle sorte que le mouvement de translation simultané des deux appuis réglables selon les axes perpendiculaires au plan du triangle rectangle réalisent l'orientation en site du faisceau et le mouvement individuel de translation suivant l'axe Y de l'appui réglable défini par l'extrémité de l'élément intermédiaire réalise l'orientation en azimut du faisceau lumineux.

## Revendications

1. Dispositif de réglage de l'orientation selon deux directions perpendiculaires d'un faisceau lumineux émis par un projecteur de véhicule automobile, muni d'au moins un réflecteur (R) comprenant trois appuis (A₁, A₂, A₃) essentiellement ponctuels contre une structure fixe (100), les trois appuis étant disposés aux trois sommets d'un triangle rectangle, l'un desdits appuis (A₁) étant fixe et les deux autres appuis (A₂, A₃), délimitant un côté du triangle, adjacent à l'angle droit, étant réglables, ledit dispositif de réglage comprenant deux éléments d'entraînement (204, 205) comportant chacun une extrémité (204', 205'), définissant un appui réglable (A₂, A₃), montée sur le réflecteur (R), un premier élément d'entraînement (204) coopérant par vissage à son extrémité opposée (204'') avec la structure fixe (100), dispositif de réglage caractérisé en ce qu'il comprend deux organes rotatifs de transmission (201, 202) situés respectivement au niveau des deux appuis réglables (A₂, A₃), et aptes à être entraînés simultanément en rotation respectivement autour de deux axes Y, X perpendiculaires au plan du triangle, par un premier organe d'entraînement (400), lesdits organes rotatifs de transmission (201, 202) étant fixes en translation axiale et montés sur les deux éléments d'entraînement (204, 205) solidaires en rotation desdits organes rotatifs de transmission (201, 202) tout en étant libres en translation axiale, le deuxième élément d'entraînement (205) coopérant par vissage avec une structure (203) mobile en translation et bloquée en rotation, de sorte que le mouvement simultané de rotation des organes rotatifs de transmission (201,202) entraîne un déplacement simultané en translation des deux appuis réglables (A_{2,} A₃) suivant lesdits axes Y, X, pour effectuer l'orientation du faisceau lumineux suivant une des deux directions, et en ce qu'il comprend un deuxième organe d'entraînement (300) qui entraîne en translation axiale ladite structure mobile (203), de façon à translater axialement le deuxième élément d'entraînement (205) et seulement un appui réglable (A₂) correspondant pour effectuer l'orientation du faisceau lumineux selon la deuxième direction perpendiculaire.

2. Dispositif de réglage selon la revendication 1, caractérisé en ce que les deux appuis réglables (A₂, A₃) délimitent le côté vertical (Z) du triangle rectangle de sorte que le mouvement de translation simultané des deux appuis réglables (A₂, A₃) selon les axes X, Y réalise l'orientation en azimut du faisceau lumineux et le mouvement de translation individuel selon l'axe Y du deuxième appui réglable (A₂) réalise l'orientation en site du faisceau lumineux.

3. Dispositif de réglage selon la revendication 1, caractérisé en ce que les deux appuis réglables (A₂, A₃) délimitent le côté horizontal du triangle rectangle de sorte que le mouvement de translation simultané des deux appuis réglables (A₂, A₃) suivant les axes Y, X réalise l'orientation en site du faisceau lumineux et le mouvement individuel de translation suivant l'axe Y du deuxième appui réglable (A₂) réalise l'orientation en azimut du faisceau lumineux.

4. Dispositif de réglage selon l'une des revendications 1 à 3, caractérisé en ce que le projecteur étant un projecteur à boîtier (B), l'ensemble du dispositif est placé à l'intérieur du boîtier (B), et en ce que les organes rotatifs de transmission (201, 202) sont des pignons montés à rotation dans un support (110) fixé à une partie arrière (100) du boîtier (B).

5. Dispositif de réglage selon la revendication 4, caractérisé en ce que le premier organe d'entraînement est une vis sans fin (400) montée à rotation dans le boîtier (B), et en ce que le deuxième organe d'entraînement (300) est un correcteur à moteur électrique monté solidaire du boîtier (B).

6. Dispositif selon l'une quelconque des revendications 1 à 5, caractérisé en ce que le premier élément d'entraînement (204) comprend à l'extrémité opposée (204'') à celle définissant l'appui réglable (A₃), un filetage monté dans un taraudage (206) solidaire de la structure fixe (100).

7. Dispositif selon l'une quelconque des revendications 1 à 6, caractérisé en ce que la structure mobile en translation et bloquée en rotation, est une tige filetée (203) sur laquelle est monté le deuxième élément d'entraînement (205).

## Claims

1. Device for adjusting the orientation, in two perpendicular directions, of a light beam emitted by a motor vehicle headlight, provided with at least one reflector (R) comprising three essentially punctual abutments (A₁, A₂, A₃) against a fixed structure (100), the three abutments being disposed at the three apexes of a right-angled triangle, one of the said abutments (A₁) being fixed and the other two abutments (A₂, A₃), delimiting one side of the triangle, adjacent to the right angle, being adjustable, the said adjustment device comprising two drive elements (204, 205) each having an end (204', 205'), defining an adjustable abutment (A₂, A₃), mounted on the reflector (R), a first drive element (204) cooperating by screwing at its opposite end (204'') with the fixed structure (100), the said adjustment device being characterised in that it comprises two rotary transmission members (201, 202) situated respectively at the level of the two adjustable abutments (A₂, A₃), and able to be driven simultaneously in rotation respectively about two axes Y, X perpendicular to the plane of the triangle, by means of a first drive member (400), the third rotary transmission members (201, 202) being fixed with respect to axial translation and mounted on the two drive elements (204, 205) fixed with respect to rotation to the said rotary transmission members (201, 202) whilst being free with respect to axial translation, the second drive element (205) cooperating by screwing with a structure (203) movable with respect to translation and locked with respect to rotation, so that the simultaneous rotation movement of the rotary transmission members (201, 202) gives rise to a simultaneous translational movement of the two adjustable abutments (A₂, A₃) along the said axes Y, X, in order to effect the orientation of the light beam in one of the two directions, in that it comprises a second drive member (300) which drives the said movable structure (203) in axial translation, so as to axially translate the second drive element (205) and only one corresponding adjustable abutment (A₂) in order to effect the orientation of the light beam in the second direction at right angles.

2. Adjustment device according to Claim 1, characterised in that the two adjustable abutments (A₂, A₃) delimit the vertical side (Z) of the right-angled triangle so that the simultaneous translational movement of the two adjustable abutments (A₂, A₃) along the axes X, Y effects the orientation in azimuth of the light beam and the individual translational movement along the axis Y of the second adjustable abutment (A₂) effects the elevational orientation of the light beam.

3. Adjustment device according to Claim 1, characterised in that the two adjustable abutments (A₂, A₃) delimit the horizontal side of the right-angled triangle so that the simultaneous translational movement of the two adjustable abutments (A₂, A₃) along the axes Y, X effects the elevational orientation of the light beam and the individual translational movement along the axis Y of the second adjustable abutment (A₂) effects the orientation in azimuth of the light beam.

4. Adjustment device according to one of Claims 1 to 3, characterised in that, the headlight being a headlight with a housing (B), the whole of the device is placed inside the housing (B), and in that the rotary transmission members (201, 202) are gears rotatably mounted in a support (110) fixed to a rear part (100) of the housing (B).

5. Adjustment device according to Claim 4, characterised in that the first drive member is a worm (400) mounted rotatably in the housing (B), and in that the second drive member (300) is a controller with an electric motor mounted fixed to the housing (B).

6. Device according to any one of Claims 1 to 5, characterised in that the first drive element (204) comprises, at the opposite end (204'') to the one defining the adjustable abutment (A₃), a male thread mounted in a female thread (206) integral with the fixed structure (100).

7. Device according to any one of Claims 1 to 6, characterised in that the structure which is movable in translation and locked with respect to rotation is a threaded rod (203) on which the second drive element (205) is mounted.

## Patentansprüche

1. Vorrichtung für die in zwei senkrechten Richtungen erfolgende Neigungsregelung eines Lichtbündels, das durch einen Scheinwerfer mit wenigstens einem Reflektor (R) abgestrahlt wird, der drei im wesentlichen punktuelle Auflagen (A₁, A₂, A₃) an einer ortsfesten Struktur (100) umfaßt, wobei die drei Auflagen an den drei Spitzen eines rechtwinkligen Dreiecks angeordnet sind, wobei eine der besagten Auflagen (A₁) fest ist und die beiden anderen Auflagen (A₂, A₃), die eine am rechten Winkel anliegende Seite des Dreiecks begrenzen, verstellbar sind, wobei die besagte Regelungsvorrichtung zwei Antriebselemente (204, 205) enthält, die jeweils ein am Reflektor (R) angebrachtes Ende (204', 205') umfassen, das eine verstellbare Auflage (A₂, A₃) definiert, wobei ein erstes Antriebselement (204) durch Verschraubung an seinem gegenüberliegenden Ende (204'') mit der ortsfesten Struktur (100) zusammenwirkt, **dadurch gekennzeichnet,** daß sie zwei drehbare Übertragungsorgane (201, 202) umfaßt, die in Höhe der zwei verstellbaren Auflagen (A₂, A₃) angeordnet sind und gleichzeitig um zwei zur Ebene des Dreiecks senkrechte Achsen X, Y durch ein erstes Antriebsorgan (400) drehend angetrieben werden können, wobei die besagten drehbaren Übertragungsorgane (201, 202) axial verschiebungsfest und an den zwei Antriebselementen (204, 205) gelagert sind, die drehfest mit den besagten drehbaren Übertragungsorganen (201, 202) verbunden und axial frei verschiebbar sind, wobei das zweite Antriebselement (205) durch Verschraubung mit einer geradlinig verschiebbaren und gegen Verdrehung gesicherten Struktur (203) zusammenwirkt, so daß die gleichzeitige Drehbewegung der drehbaren Übertragungsorgane (201, 202) eine gleichzeitige geradlinige Verschiebung der zwei verstellbaren Auflagen (A₂, A₃) entlang den besagten Achsen X, Y bewirkt, um die Neigung des Lichtbündels in einer der beiden Richtungen zu bewirken, und daß sie ein zweites Antriebsorgan (300) umfaßt, das die besagte bewegliche Struktur (203) in einer axialen Verschiebung antreibt, um das zweite Antriebselement (205) und nur eine entsprechende verstellbare Auflage (A₂) axial zu verschieben, um die Neigung des Lichtbündels in der zweiten senkrechten Richtung zu bewirken.

2. Regelungsvorrichtung nach Anspruch 1, **dadurch gekennzeichnet,** daß die zwei verstellbaren Auflagen (A₂, A₃) die vertikale Seite (Z) des rechtwinkligen Dreiecks begrenzen, so daß die gleichzeitige Verschiebebewegung der zwei verstellbaren Auflagen (A₂, A₃) entlang den Achsen X, Y die Seitenwinkelneigung des Lichtbündels herbeiführt und die individuelle Verschiebebewegung der zweiten verstellbaren Auflage (A₂) entlang der Achse Y die Höhenwinkelneigung des Lichtbündels herbeiführt.

3. Regelungsvorrichtung nach Anspruch 1, **dadurch gekennzeichnet,** daß die zwei verstellbaren Auflagen (A₂, A₃) die horizontale Seite des rechtwinkligen Dreiecks begrenzen, so daß die gleichzeitige Verschiebebewegung der zwei verstellbaren Auflagen (A₂, A₃) entlang den Achsen X, Y die Höhenwinkelneigung des Lichtbündels herbeiführt und die individuelle Verschiebebewegung der zweiten verstellbaren Auflage (A₂) entlang der Achse Y die Seitenwinkelneigung des Lichtbündels herbeiführt.

4. Regelungsvorrichtung nach einem der Ansprüche 1 bis 3, **dadurch gekennzeichnet,** daß, insoweit es sich bei dem Scheinwerfer um einen Scheinwerfer mit einem Gehäuse (B) handelt, die gesamte Vorrichtung im Innern des Gehäuses (B) angeordnet ist und daß die drehbaren Übertragungsorgane (201, 202) Ritzel sind, die, drehbar in einem Träger (110) gelagert sind, der an einem hinteren Teil (100) des Gehäuses (B) befestigt ist.

5. Regelungsvorrichtung nach Anspruch 4, **dadurch gekennzeichnet,** daß es sich bei dem ersten Antriebsorgan um eine Schnecke (400) handelt, die drehbar im Gehäuse (B) gelagert ist, und daß das zweite Antriebsorgan (300) ein Regler mit Elektromotor ist, der fest mit dem Gehäuse (B) verbunden ist.

6. Regelungsvorrichtung nach einem der Ansprüche 1 bis 5, **dadurch gekennzeichnet,** daß das erste Antriebselement (204) an dem Ende (204'') das dem die verstellbare Auflage (A₃) definierenden Ende gegenüberliegt, ein Außengewinde umfaßt, das in ein fest mit der ortsfesten Struktur (100) verbundenes Innengewinde (206) eingesetzt ist.

7. Regelungsvorrichtung nach einem der Ansprüche 1 bis 6, **dadurch gekennzeichnet,** daß die geradlinig verschiebbare und gegen Verdrehung gesicherte Struktur ein Gewindestift (203) ist, an dem das zweite Antriebselement (205) gelagert ist.
